# EUROPEAN PATENT SPECIFICATION

(11) **EP 3 967 516 B1**
(45) Date of publication and mention of the grant of the patent: **25.02.2026**
(21) Application number: 19927590.0
(22) Date of filing: 25.11.2019
(51) Int. Cl.: B60C 5/00, B60C 19/00

(54) **TIRE**
REIFEN
PNEUMATIQUE

(30) Priority: 07.05.2019 JP 2019087679
(43) Date of publication of application: 16.03.2022
(73) Proprietor: BRIDGESTONE CORPORATION, Chuo-ku Tokyo 104-8340 (JP)
(72) Inventor: ISHIHARA, Taiga, Tokyo 104-8340 (JP); WATANABE, Jun, Tokyo 104-8340 (JP); YAMAGUCHI, Suguru, Tokyo 104-8340 (JP); KATO, Keiichi, Tokyo 104-8340 (JP); MUKAIGAWA, Tomonori, Tokyo 104-8340 (JP); GOZU, Makoto, Tokyo 104-8340 (JP); MITSUDA, Sho, Tokyo 104-8340 (JP)
(74) Representative: Marks & Clerk LLP
(86) International application number: PCT/JP2019/045970
(87) International publication number: WO 2020/225938

(56) References cited:
- EP-A1- 1 950 057
- EP-A2- 1 795 377
- WO-A1-2018/034248
- WO-A1-2018/034248
- WO-A1-2018/112179
- JP-A- 2007 135 583
- JP-A- 2007 326 555
- JP-A- 2008 162 496
- JP-A- 2018 075 897
- JP-A- 2018 186 798
- JP-A- 2018 186 798
- "Sound Absorber'' as Original Fitment on Audi Q7 models including the all new SQ7 TDI", HANKOOK SILENT TECHNOLOGY, 12 February 2016 (2016-02-12), XP055759361, Retrieved from the Internet <URL:https://www.hankooktire.com/global/about-hankook-tire/media-center/press-room.59028.html>

## Description

### TECHNICAL FIELD

The present disclosure relates to a tire.

### BACKGROUND

To reduce the resonant vibrations of air and gas generated in the inner cavity of a tire (cavity resonance), a sound absorber formed from a porous body such as a sponge material, for example, has been arranged on the inner surface of the tire (see patent literature (PTL) 1).

### CITATION LIST

### Patent Literature

PTL 1: JP 2005-254924 A
PTL 2: WO2018/112179A1 discloses a tire sealant layer comprising a rubber portion with an upper surface and a lower surface, and a barrier layer upon the lower surface of the rubber portion
PTL 3: EP1950057A1 discloses a flexible polyurethane foam for tires that can effectively suppress damages, such as chips and cracks, and deformation, such as compression (permanent set in fatigue), even when attached to an inner face of a tire by using a band member.

### SUMMARY

### (Technical Problem)

However, insects are attracted to the sound absorber in some cases, particularly during storage of the tire before mounting on a rim.

It would be helpful to provide a tire capable of protecting the sound absorber from insects.

### (Solution to Problem)

A summary of the present invention is as follows.

A tire according to claim 1.

### (Advantageous Effect)

A tire capable of protecting the sound absorber from insects can be provided.

### BRIEF DESCRIPTION OF THE DRAWINGS

In the accompanying drawings:

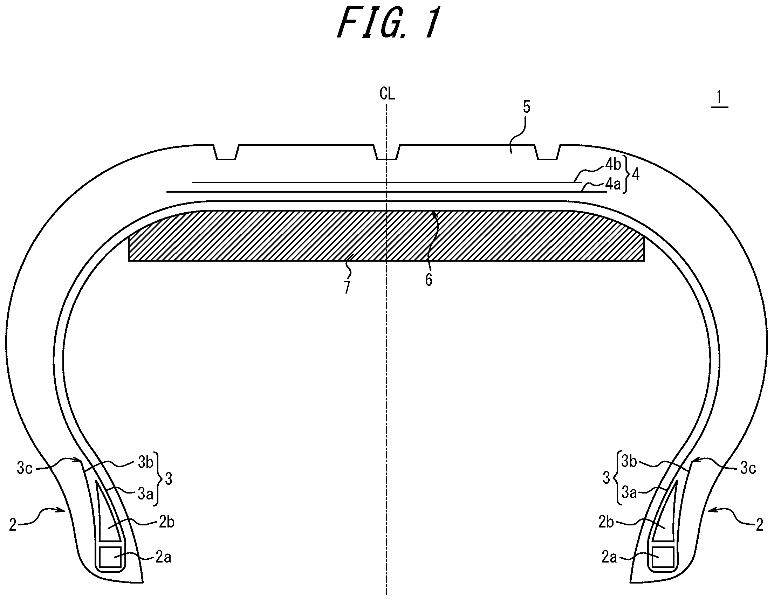

FIG. 1 is a cross-sectional view in the tire width direction of a tire .

### DETAILED DESCRIPTION

The following describes tires in detail with reference to the drawings.

FIG. 1 is a cross-sectional view in the tire width direction of a tire. As illustrated in FIG. 1, a tire 1 is a pneumatic tire and includes a carcass 3 toroidally extending between a pair of bead portions 2. The tire 1 also includes a belt 4, formed by two belt layers 4a, 4b in the illustrated example, and a tread 5 on the outer side, in the tire radial direction, of a crown portion of the carcass 3 in this order. The pneumatic tire can be filled not only with air but also with an inert gas such as nitrogen or argon.

In this example, a bead core 2a is embedded in each bead portion 2 of the pair of bead portions 2. The cross-sectional shape and material of the bead core 2a are not particularly limited, and a configuration normally used in tires can be adopted. The tire 1 in the illustrated example has a bead filler 2b with a triangular cross-sectional shape on the outer side, in the tire radial direction, of the bead core 2a. The cross-sectional shape of the bead filler 2b is not limited to this example, nor is the material particularly limited. Alternatively, the tire can be made lighter by being configured without the bead filler 2b.

In the example illustrated in FIG. 1, the carcass 3 is formed by one carcass ply that is radially arranged (with the carcass cords forming an angle of 85° or more with respect to the tire circumferential direction, preferably 90° with respect to the tire circumferential direction). On the other hand, the number of carcass plies is not particularly limited and can be two or more. In this example, the carcass 3 has a carcass body portion 3a toroidally extending between the pair of bead portions 2 and carcass folded portions 3b that extend from the carcass body portion 3a and fold up around the bead cores 2a. On the other hand, the carcass folded portion 3b can be wrapped around the bead core 2a, or can be structured to be sandwiched between a plurality of divided small bead cores. In this example, folded ends 3c of the folded portions 3b of the carcass 3 are positioned on the outer side, in the tire radial direction, of the bead filler 2b and on the inner side, in the tire radial direction, of the tire maximum width position (the tire radial position where the width in the tire width direction is the greatest), but the positions of the folded ends 3c are not limited to this example and can be set appropriately. The carcass 3 can also be a bias carcass.

In the example illustrated in FIG. 1, the tire 1 includes the belt 4 formed by the two belt layers 4a, 4b. In this example, the belt layers 4a, 4b are inclined belt layers formed by belt cords that are inclined with respect to the tire circumferential direction and intersect each other between layers. The number of belt layers is not particularly limited. The inclination angle of the belt cords in the belt layers is not particularly limited but can, for example, be 35° to 85° with respect to the tire circumferential direction. One or more reinforcing belt layers can be arranged on the outer and/or inner sides, in the tire radial direction, of the inclined belt layers. The reinforcing cords of the reinforcing belt layers are not particularly limited but can, for example, extend at an angle of 0° to 5° in the tire circumferential direction. The width in the tire width direction of each belt layer and each reinforcing belt layer is not particularly limited. Appropriate known materials can be used as the materials of the belt cords and the reinforcing cords, and the number of cords and the like can also be set as needed.

In the illustrated example, the tire 1 has a tread 5 formed by one layer of tread rubber. On the other hand, the tread rubber configuring the tread 5 may be formed from a plurality of different rubber layers. In this case, the different rubber layers can be stacked in the tire radial direction and/or arranged side by side in the tire width direction.

As illustrated in FIG. 1, the tire 1 includes a sound absorber 7 on the inner surface 6 of the tire 1 (in this example, more specifically, the inner surface of the tread portion including the tread 5). In the tire 1, the sound absorber 7 is a porous body (in this example, a sponge material). In this example, the sound absorber 7 has a rectangular shape in a cross-sectional view in the tire width direction, but the shape of the sound absorber 7 is not particularly limited. The dimensions and the like of the sound absorber 7 are also not particularly limited, but the volume of the sound absorber 7 is preferably 0.1% to 80% of the total volume of the inner cavity of the tire 1. The reason is that the sound absorption can be improved by setting the volume of the sound absorber 7 to 0.1% or more of the total volume of the inner cavity of the tire 1, whereas a weight increase due to the sound absorber 7 can be suppressed by setting the volume of the sound absorber 7 to 80% or less of the total volume of the inner cavity of the tire 1. The "volume" referred to here is the volume under normal temperature and pressure, with the tire 1 removed from the rim. The "total volume of the inner cavity of the tire" refers to the total volume when the tire 1 is mounted on an applicable rim and filled to the specified internal pressure.

The "applicable rim" refers to a standard rim of an applicable size, such as the Measuring Rim in the STANDARDS MANUAL of the European Tyre and Rim Technological Organisation (ETRTO) in Europe or the Design Rim in the YEAR BOOK of the Tire and Rim Association, Inc. (TRA) in the USA, that is described, or will be described in the future, in industrial standards effective in the region where the tire is manufactured and used, such as the YEAR BOOK published by the Japan Automobile Tyre Manufacturers Association (JATMA) in Japan, the STANDARDS MANUAL of the ETRTO, and the YEAR BOOK of the TRA. (In other words, the "rim" encompasses not only current sizes but also sizes that may be included in industrial standards in the future. An example of the "size that will be described in the future" is the size described under "future developments" in the ETRTO Standards Manual 2013). In the case of a size not specified in the aforementioned industrial standards, the "rim" refers to a rim whose width corresponds to the bead width of the tire.

The "specified internal pressure" represents the air pressure (maximum air pressure) corresponding to the maximum load capability of a single wheel in an applicable size/ply rating described by the aforementioned JATMA or the like. In the case of a size not listed in the industrial standards, the "specified internal pressure" refers to the air pressure (maximum air pressure) corresponding to the maximum load capability prescribed for each vehicle on which the tire is mounted.

Here, in this example, the sound absorber 7 extends continuously in the tire circumferential direction, but the sound absorber 7 can also be formed discontinuously. Also, in this example, the sound absorber 7 is arranged on the inner surface of the tread portion, but the sound absorber 7 can be arranged in various other ways, such as on the inner surface of the sidewall portion.

The material forming the sound absorber 7 can be any material enabling control to reduce the cavity resonance energy by, for example, mitigating, absorbing, or converting the cavity resonance energy into another form of energy (such as thermal energy) and is not limited to the above-described porous body. A non-woven fabric made of organic or inorganic fibers, for example, can also be used.

When the sound absorber 7 is a sponge material, the sponge material can be a sponge-like porous structure including, for example, a sponge having continuous bubbles made of foamed rubber or synthetic resin. In addition to the above-described sponge, examples of the sponge material include a webbed material in which animal fibers, plant fibers, synthetic fibers, or the like are intertwined and integrally connected. The above-described "porous structure" is not limited to a structure with continuous bubbles but also includes a structure with discontinuous bubbles. The above-described sponge material converts, into thermal energy, the vibrational energy of the air vibrating in the voids formed on the surface and inside of the sponge material. This suppresses the cavity resonance in the inner cavity of the tire, thereby reducing road noise.

Examples of the sponge material include synthetic resin sponges such as an ether-based polyurethane sponge, ester-based polyurethane sponge, and polyethylene sponge, and rubber sponges such as a chloroprene rubber sponge (CR sponge), ethylene propylene diene rubber sponge (EPDM sponge), and nitrile rubber sponge (NBR sponge). In terms of sound absorption, weight reduction, adjustability of foaming, durability, and the like, sponges such as polyurethane sponges, including ether-based polyurethane sponges, or polyethylene sponges are preferably used.

In the case of the sound absorber 7 being a sponge material, the hardness of the sponge material is not limited but is preferably in the range of 5 N to 450 N. The sound absorption can be improved by the hardness being set to 5 N or more, whereas the adhesiveness of the sound absorber can be increased by the hardness being set to 450 N or less. For the same reasons, the hardness of the sound absorber is more preferably in the range of 8 N to 300 N. Here, the "hardness" is defined as the value measured in accordance with method A in subsection 6.3 of the measurement method in section 6 of JIS K 6400.

The specific gravity of the sponge material is preferably between 0.001 and 0.090. The reason is that the sound absorption can be improved by the specific gravity of the sponge material being 0.001 or more, whereas an increase in weight due to the sponge material can be suppressed by the specific gravity of the sponge material being 0.090 or less. For the same reasons, the specific gravity of the sponge material is more preferably between 0.003 and 0.080. Here, the "specific gravity" is the value obtained by converting the apparent density into specific gravity in accordance with the measurement method in section 5 of JIS K 6400.

The tensile strength of the sponge material is preferably between 20 kPa and 500 kPa. The reason is that the adhesiveness can be improved by the tensile strength of the sponge material being 20 kPa or more, whereas the productivity of the sponge material can be improved by the tensile strength of the sponge material being 500 kPa or less. For the same reasons, the tensile strength of the sponge material is more preferably between 40 kPa and 400 kPa. Here, the "tensile strength" is defined as the value measured with a No. 1 dumbbell test piece in accordance with the measurement method in section 10 of JIS K 6400.

The elongation at break of the sponge material is preferably between 110% and 800%. The reason is that cracks can be prevented from forming in the sponge material by the elongation at break being 110% or more, whereas the productivity of the sponge material can be improved by the elongation at break being 800% or less. For the same reasons, the elongation at break of the sponge material is more preferably between 130% and 750%. Here, the "elongation at break" is defined as the value measured with a No. 1 dumbbell test piece in accordance with the measurement method in section 10 of JIS K 6400.

The tearing strength of the sponge material is preferably between 1 N/cm and 130 N/cm. The reason is that cracks can be prevented from forming in the sponge material by the tearing strength being 1 N/cm or more, whereas the manufacturability of the sponge material can be improved by the tearing strength being 130 N/cm or less. For the same reasons, the tearing strength of the sponge material is more preferably between 3 N/cm and 115 N/cm. Here, the "tearing strength" is defined as the value measured with a No. 1 test piece in accordance with the measurement method in section 11 of JIS K 6400.

The foaming ratio of the sponge material should be between 1% and 40%. The reason is that the sound absorption can be improved by the foaming ratio of the sponge material being 1% or more, whereas the productivity of the sponge material can be improved by the foaming ratio of the sponge material being 40% or less. For the same reasons, the foaming ratio of the sponge material is more preferably between 2% and 25%. Here, the "foaming ratio" refers to the value yielded by subtracting 1 from the ratio A/B of the specific gravity A of the solid phase portion of the sponge material to the specific gravity B of the sponge material and then multiplying by 100.

The overall mass of the sponge material is preferably between 5 g and 800 g. The reason is that the sound absorption can be improved by the mass being 5 g or more, whereas an increase in weight due to the sponge material can be suppressed by the mass being 800 g or less. For the same reasons, the mass of the sponge material is preferably between 20 g and 600 g.

A portion or all (in this tire 1, all) of the sound absorber 7 is orange. In this tire 1, the wavelength of the visible light emitted from a portion or all (in this tire 1, all) of the sound absorber 7 is between 590 nm and 620 nm.

Various techniques can be used to make the sound absorber 7 orange, such as dyeing the sound absorber 7 orange.

The following describes the effects of the tire according to this embodiment.

First, according to the tire 1, the sound absorber 7 is arranged on the inner surface 6 of the tire 1, thereby reducing the resonant vibration (cavity resonance) and improving the sound absorption.

The sound absorber 7, which is a porous body (for example, a sponge material) or the like, tends to retain heat even during storage. By virtue of having pores and gaps, the sound absorber 7 also tends to attract insects, which remain inside. In contrast, in the tire 1, a portion or all (in this tire 1, all) of the sound absorber 7 is orange (in this example, the wavelength of visible light emitted from a portion or all (in this tire 1, all) of the sound absorber 7 is between 590 nm and 620 nm). Therefore, the sound absorber 7 absorbs light in the ultraviolet region, which is the wavelength region that insects easily sense. This prevents insects from being attracted to the sound absorber 7, thereby protecting from insects.

As described above, the tire 1 can protect the sound absorber 7 from insects.

The wavelength of visible light emitted from a portion or all (in this tire 1, all) of the sound absorber is preferably between 590 nm and 620 nm. The reason is that when the wavelength is within this range, light having wavelengths in the ultraviolet region can be absorbed more reliably, thereby achieving the aforementioned effect more reliably.

The sound absorber is preferably a porous body. This enables a reduction in weight in the tire while still achieving the aforementioned effects.

In the aforementioned case, the porous body is preferably a sponge material. This is because a sponge material is inexpensive and facilitates the manufacturing of an orange sound absorber.

In the case of only a portion of the sound absorber 7 being orange, the remaining portion is green. The reason is that green includes a wavelength that insects avoid. The effect of absorbing ultraviolet rays to protect from insects, combined with the effect of protecting from insects by inclusion of a color that insects avoid, can effectively protect from various kinds of insects. In this case, the orange and green portions is arranged side by side in the tire width direction.

### REFERENCE SIGNS LIST

- 1: Tire
- 2: Bead portion
- 2a: Bead core
- 2b: Bead filler
- 3: Carcass
- 3a: Carcass body portion
- 3b: Carcass folded portion
- 3c: Folded end
- 4: Belt
- 4a, 4b: Belt layer
- 5: Tread
- 6: Inner surface of tire
- 7: Sound absorber

## Claims

1. A tire (1) comprising:
a sound absorber (7) on an inner surface of the tire,
**characterized in that**,
a portion of the sound absorber is orange and the remaining portion is green; wherein the orange and green portions are arranged side by side in the tire width direction.

2. The tire of claim 1, wherein a wavelength of visible light emitted from the orange portion of the sound absorber is between 590 nm and 620 nm.

3. The tire of claim 1 or 2, wherein the sound absorber is a porous body.

4. The tire of claim 3, wherein the porous body is a sponge material.

## Patentansprüche

1. Reifen (1), umfassend:
ein Schalldämpfer (7) auf einer Innenoberfläche des Reifens,
**dadurch gekennzeichnet, dass**
ein Abschnitt des Schalldämpfers orange ist, und der verbleibende Abschnitt grün ist; wobei der orange und grüne Abschnitt in Richtung der Reifenbreite nebeneinander angeordnet sind.

2. Reifen nach Anspruch 1, wobei eine Wellenlänge von sichtbarem Licht, das vom orangen Abschnitt des Schalldämpfers emittiert wird, zwischen 590 nm und 620 nm liegt.

3. Reifen nach Anspruch 1 oder 2, wobei der Schalldämpfer ein poröser Körper ist.

4. Reifen nach Anspruch 3, wobei der poröse Körper ein Schwamm-Material ist.

## Revendications

1. Pneumatique (1) comprenant :
un absorbeur de son (7) sur une surface intérieure du pneumatique,
**caractérisé en ce que**,
une partie de l'absorbeur de son est orange et la partie restante est verte ; dans lequel les parties orange et verte sont agencées côte à côte dans la direction de la largeur du pneumatique.

2. Pneumatique selon la revendication 1, dans lequel la longueur d'onde de la lumière visible émise par la partie orange de l'absorbeur de son est comprise entre 590 nm et 620 nm.

3. Pneumatique selon la revendication 1 ou 2, dans lequel l'absorbeur de son est un corps poreux.

4. Pneumatique selon la revendication 3, dans lequel le corps poreux est un matériau spongieux.
